# EUROPÄISCHE PATENTANMELDUNG

(11) **EP 4 534 382 A1**
(43) Veröffentlichungstag der Anmeldung: **09.04.2025**
(21) Anmeldenummer: 24199207.2
(22) Anmeldetag: 09.09.2024
(51) Int. Cl.: B61L 27/12, G06N 5/01, G06N 10/60

(54) **VERFAHREN UND VORRICHTUNG ZUM ERMITTELN EINES FAHRPLANS FÜR SCHIENENFAHRZEUGE BEI STÖRUNGEN**

(30) Priorität: 19.09.2023 DE 102023209086
(71) Anmelder: Siemens Mobility GmbH, 81739 München (DE)
(72) Erfinder: Barke, Stephan, 38259 Salzgitter (DE); Filippidis, Lazos, 14532 Kleinmachnow (DE); Kücükkaya, Alper, 31224 Peine (DE); Suwalski, Ireneus, 12105 Berlin (DE); Wegele, Stefan, 38126 Braunschweig (DE)
(74) Vertreter: Siemens Patent Attorneys

(57) **Zusammenfassung**

Bereitgestellt ist ein Verfahren eines Ermittelns eines veränderten Fahrplans (13) für mehrere Schienenfahrzeuge bei Vorliegen zumindest einer Störung eines ursprünglichen Fahrplans (4), wobei ein Fahrplan für jedes Schienenfahrzeug eine Zeit-Weg-Definition (T1.1, T2.1,...) enthält, wobei das Verfahren aufweist: Basierend auf dem ursprünglichen Fahrplan (4), zyklisches (18) Durchführen einer heuristischen Optimierung (5), um einen ersten Fahrplan (6) zu erzeugen; Vorhalten von Zeit-Weg-Definitionen (7, 9) für ein oder mehrere Schienenfahrzeuge, die während der zyklisch durchgeführten heuristischen Optimierung (5) erzeugt wurden; Formulieren (10) einer QUBO-Aufgabe basierend auf den gespeicherten Zeit-Weg-Definitionen (9); Lösen (16) der QUBO-Aufgabe, um einen zweiten Fahrplan (11) zu erzeugen; Vergleichen des ersten Fahrplans (6) und des zweiten Fahrplans (11), um den veränderten Fahrplan (13) auszuwählen.

## Beschreibung

### GEBIET DER ERFINDUNG

Die vorliegende Erfindung betrifft ein Verfahren und eine entsprechende Vorrichtung eines Ermittelns eines veränderten Fahrplans für mehrere Schienenfahrzeuge bei Vorliegen zumindest einer Störung eines ursprünglichen Fahrplans. Ferner betrifft die vorliegende Erfindung eine Schienenfahrzeugleitstelle, welche das Verfahren aufweist.

### STAND DER TECHNIK

In einer modernen eisenbahntechnischen Anlage gibt es einen geltenden aktuellen Fahrplan, in dem genau festgelegt ist, wie der Zugverkehr organisiert ist. Dabei ist beispielsweise die Zugfolge auf jeder Strecke festgelegt und auch die genauen zeitlichen Abstände. Allerdings kann der aktuelle Fahrplan nicht immer eingehalten werden, weil beispielsweise Störungen verschiedenster Art auftreten können, die zu unerwarteten Verzögerungen führen. Hieraus entstehen Konflikte im Zugverkehr bzw. im Fahrplan, bei dem beispielsweise ein Zug auf einen anderen Zug warten muss, da dieser beispielsweise einen vorausliegenden Streckenabschnitt blockiert.

Um diese Konflikte im Zugverkehr möglichst optimal zu lösen, wurden in den letzten Jahren Verfahren und Algorithmen entwickelt, die einen optimierten Fahrplan ermitteln, der bestehende Konflikte im aktuellen Fahrplan löst. Herkömmlicherweise wurde als Dispositionsunterstützung ein optimierter Fahrplan berechnet, in dem für alle Trassen Konflikte möglichst gut aufgelöst sind. Ein herkömmlich auftretendes Problem ist jedoch, dass durch Folgekonflikte die Anzahl der möglichen Alternativen exponentiell wächst. Herkömmlich angewendete global suchende Optimierungsverfahren benötigen dafür viel Zeit, die teilweise für die Echtzeitanwendung zu lang ist.

Es ist beobachtet worden, dass ein durch herkömmliche Optimierung eines ursprünglichen Fahrplans ermittelter Ersatzfahrplan nicht in allen Situationen oder unter allen Umständen den tatsächlich bestmöglichen Fahrplan repräsentiert.

Es ist somit eine Aufgabe der vorliegenden Erfindung, ein Verfahren und eine entsprechende Vorrichtung eines Ermittelns eines veränderte Fahrplans für mehrere Schienenfahrzeuge bei Vorliegen zumindest einer Störung eines ursprünglichen Fahrplans bereitzustellen, wobei einerseits die erforderliche Zeit zum Ermitteln des veränderten Fahrplans in akzeptablen Grenzen verbleibt, um zum Beispiel auch für Echtzeitanwendung tauglich zu sein, und wobei ferner der veränderte ermittelte Fahrplan mit größerer Gewissheit oder Wahrscheinlichkeit ein tatsächlich gegenüber herkömmlichen Fahrplänen verbesserter oder optimierter Fahrplan ist.

### ZUSAMMENFASSUNG DER ERFINDUNG

Die Aufgabe wird durch die Gegenstände der unabhängigen Ansprüche gelöst, die einerseits auf ein Verfahren und andererseits auf eine Vorrichtung eines Ermittelns eines veränderten Fahrplans mehrere Schienenfahrzeuge gerichtet sind. Die abhängigen Ansprüche spezifizieren bestimmte Ausführungsformen der vorliegenden Erfindung.

Gemäß einer Ausführungsform der vorliegenden Erfindung ist ein Verfahren eines Ermittelns eines veränderten Fahrplans für mehrere Schienenfahrzeuge bei Vorliegen zumindest einer Störung eines ursprünglichen Fahrplans bereitgestellt, wobei ein Fahrplan für jedes Schienenfahrzeug eine Zeit-Weg-Definition enthält, wobei das Verfahren aufweist: Basierend auf dem ursprünglichen Fahrplan, zyklisches Durchführen einer heuristischen Optimierung, um einen ersten Fahrplan zu erzeugen; Speichern/Sammeln/Vorhalten von Zeit-Weg-Definitionen für ein oder mehrere Schienenfahrzeuge, die während der zyklisch durchgeführten heuristischen Optimierung erzeugt wurden; Formulieren einer QUBO-Aufgabe basierend auf den gespeicherten Zeit-Weg-Definitionen; Lösen der QUBO-Aufgabe, um einen zweiten Fahrplan zu erzeugen; Vergleichen und/oder Analysieren des ersten und des zweiten Fahrplans, um den veränderten Fahrplan auszuwählen.

Das Verfahren kann zum Beispiel in die Hardware und/oder Software implementiert werden, insbesondere unter Verwendung eines speziell ausgelegten Chips und z.B. von einer Schienenfahrzeugleitstelle oder - überwachungsstelle oder - steuerstelle durchgeführt werden.

Bei den Schienenfahrzeugen kann es sich zum Beispiel um Fernverkehrszüge, Nahverkehrszüge, S-Bahne, Straßenbahnen, Tram, U-Bahnen oder dergleichen handeln. Dabei können zum Beispiel zwischen 50 und 500 Schienenfahrzeuge zum Beispiel unterstützt werden oder eine sogar höhere Zahl an Schienenfahrzeugen.

Bei der Störung kann es sich um eine Kollision, um einen Unfall, um eine teilweise Stilllegung eines Gleisabschnittes, um eine Beschädigung oder Zerstörung eines Gleisabschnittes, um einen Stromausfall, um einen Kommunikationsausfall oder dergleichen handeln. Die Störung kann z.B. eine Haltezeitverlängerung durch erhöhtes Fahrgastaufkommen and/oder Weichenstörung und/oder Türstörung und/oder Verspätung eines Zubringers aufweisen.

Die Störung kann dazu führen, dass zumindest eine geplante Fahrt zumindest eines Schienenfahrzeuges teilweise oder vollständig nicht gemäß dem Fahrplan durchgeführt werden kann.

Sowohl der ursprüngliche Fahrplan als auch der veränderte Fahrplan legen dabei für jedes Schienenfahrzeug eine Zeit-Weg-Definition (auch also "Trip" bezeichnet) fest, welche zum Beispiel beinhaltet, dass das jeweilige Schienenfahrzeug zu einer bestimmten Zeit an einem bestimmten Ort gemäß Plan befindlich sein sollte. Die Zeit-Weg-Definition kann zum Beispiel als eine Liste von Ortspunkten und Zeitpunkten repräsentiert werden oder dargestellt sein.

Für die Optimierung kann zum Beispiel zu einer gegebenen Zielfunktion ein Eingangsargument so gefunden werden, dass die Funktion zum Beispiel einen minimalen Wert annimmt oder einen maximalen Wert annimmt. Eine Heuristik kann zum Beispiel darin bestehen, eine Versuch- und Irrtum-Veränderung von einer oder mehreren Zeit-Weg-Definitionen durchzuführen bzw. zu bestimmen. Änderungen von Zeit-Weg-Definitionen können zum Beispiel auch aus zuvor erlangten Erfahrungen durchgeführt werden. Im Stand der Technik sind verschiedene Verfahren einer heuristischen Optimierung bekannt.

Die heuristische Optimierung wird zyklisch in dem Sinne durchgeführt, dass sie wiederholt bzw. iterativ durchgeführt wird, wobei vorhergehend erhaltene Ergebnisse für den weiteren Zyklus verwendet werden können. Die heuristische Optimierung kann zyklisch zum Beispiel zwischen fünf Mal und einhundert Mal oder fünf Mal und eintausend Mal durchgeführt werden. Die Anzahl der Zyklen kann sich danach richten, zu welchem Zeitpunkt tatsächlich der veränderte Fahrplan und somit auch der erste Fahrplan zur Verfügung stehen muss.

Während der Durchführung der heuristischen Optimierung werden ein oder mehrere veränderte Zeit-Weg-Definitionen erzeugt, die zusammen mit den unveränderten Zeit-Weg-Definitionen jeweils einen Zyklus-assoziierten Fahrplan bilden. Somit werden wiederholt und iterativ nacheinander Fahrpläne erzeugt, die jeweils der Zyklusnummer zugeordnet sind. Der erste Fahrplan kann als derjenige von dem letzten Zyklus ausgegebene betrachtet werden.

Alle in allen Zyklen (der der heuristischen Optimierung) erzeugten möglicherweise veränderten Zeit-Weg-Definitionen werden gesammelt und insbesondere in einer Datenbank gespeichert. Diese gespeicherten Zeit-Weg-Definitionen werden nicht für die heuristische Optimierung weiterverwendet, sondern werden dynamisch für die Formulierung einer QUBO-Aufgabe (Quadratic unconstrained binary optimization) verwendet. In der Menge der gespeicherten Zeit-Weg-Definitionen können für ein bestimmtes Schienenfahrzeug mitunter ein oder mehrere Zeit-Weg-Definitionen enthalten sein. Die QUBO-Aufgabe untersucht theoretisch alle Kombinationen aller Zeit-Weg-Definitionen, welche gespeichert wurden. Die QUBO-Aufgabe kann zum Beispiel eine oder mehrere Kombinationen von Zeit-Weg-Definitionen auswerten, die während der heuristischen Optimierung nicht berücksichtigt oder nicht betrachtet wurden. Die QUBO-Aufgabe kann durch herkömmlich verfügbare Mittel, insbesondere einen speziell dafür ausgelegten Chip, hardware- und/oder softwaremäßig gelöst werden.

Der zweite Fahrplan kann, aufgrund der möglicherweise größeren Zahl an Kombinationen oder aufgrund der Berücksichtigung der größeren Zahl von Kombinationen von Zeit-Weg-Definitionen, potentiell optimaler (bezüglich einer Bewertungsfunktion) sein als der erste Fahrplan. Während der erste Fahrplan grundsätzlich konfliktfrei sein kann (das heißt es gibt keine Kollisionen zwischen zwei Schienenfahrzeugen), kann theoretisch der zweite Fahrplan mit Konflikten behaftet sein. Mögliche Konflikte in dem zweiten Fahrplan (und möglicherweise auch in dem ersten Fahrplan) können jedoch im späteren Auswertungs- bzw. Selektionsschritt erkannt und ausgegliedert werden.

Das Vergleichen/Analysieren des ersten und des zweiten Fahrplans kann maschinell oder teilweise auch durch menschliche Intelligenz erfolgen. Dazu können zum Beispiel der erste und der zweite Fahrplan geeignet dargestellt werden, oder es können Unterschiede zwischen den Fahrplänen dargestellt werden. Damit kann ein veränderter Fahrplan in kürzerer Zeit und möglicherweise gegenüber herkömmlichen veränderten Fahrplänen höhere Güte bzw. eine bessere Bewertung haben.

Gemäß einer Ausführungsform der vorliegenden Erfindung werden bei der heuristischen Suche bzw. Optimierung bereits nur die besten und Multi-konflikt-freie Trassen (z.B. Weg-Zeit-Definitionen) konstruiert, da das heuristische Verfahren den konflikt-freien Fahrplan schrittweise verbessert. Alle diese Trassen werden gespeichert und basierend darauf die QUBO-Aufgabe formuliert. Aufgrund der besseren Auswahl an Trassen (z.B. Weg-Zeit-Definitionen, die bei der heuristischen Optimierung kumulativ gesammelt und gespeichert wurden) kann die Lösung der QUBO-Aufgabe einen optimaleren Fahrplan enthalten.

Gemäß einer Ausführungsform der vorliegenden Erfindung weist das Formulieren der QUBO-Aufgabe auf: Vorgeben eines numerischen Bewertungsschemas, welches Zeit-Weg-Definitionen und/oder Paare von Zeit-Weg-Definitionen bewertet; Berechnen einer zweidimensionalen Eingabedatenstruktur, insbesondere quadratische Matrix, aus den vorgehaltenen Zeit-Weg-Definitionen und dem Bewertungsschema, wobei die Eingabedatenstruktur eine Bewertung eines individuellen oder gemeinsamen Vorliegens der vorgehaltenen Zeit-Weg-Definitionen entsprechend dem Bewertungsschema repräsentiert, Definieren/Aufstellen einer zu optimierenden Zielfunktion basierend auf der zweidimensionalen Eingabedatenstruktur, wobei insbesondere jedes (zweifach) indizierte Element der Eingabedatenstruktur eine Bewertung des Vorliegens/Auftretens einer dem (zweifach-)Index zugeordneten Zeit-Weg-Definition und/oder eine Bewertung des Vorliegens/Auftretens eines dem (zweifach-)Index zugeordneten Paares von Zeit-Weg-Definitionen repräsentiert.

Das Bewertungsschema kann verwendet werden, um die Zielfunktion zu definieren. Das Bewertungsschema kann zum Beispiel begünstigen, wenn keine Kollisionen erfolgen, und/oder zum Beispiel, dass für ein einziges Schienenfahrzeug genau eine einzige Zeit-Weg-Definition in dem Fahrplan enthalten ist.

Die zweidimensionale Eingabedatenstruktur kann dabei zweifach indiziert sein, d.h. insbesondere Elemente enthalten, die durch zwei unabhängige Indizes zugreifbar sind oder identifizierbar sind. Nicht-Diagonalelemente der zweidimensionalen Eingabedatenstruktur können das gemeinsame Auftreten zweier Zeit-Weg-Definitionen bewerten, welche zum Beispiel dem Zeilenindex und dem Spaltenindex zugeordnet sind. Diagonalelemente der Eingabedatenstruktur können das Vorliegen einer einzelnen Zeit-Weg-Definition bewerten, welche zum Beispiel durch den Zeilenindex (= Spaltenindex) indiziert ist. Die zu optimierende Zielfunktion kann zum Beispiel durch Anwendung der zweidimensionalen Eingabedatenstruktur auf einen Binärvektor definiert werden, welcher die Dimension der Anzahl der Zeilen oder der Anzahl der Spalten der Eingabedatenstruktur hat. Damit ist eine quadratische nicht eingeschränkte binäre Optimierungsaufgabe (QUBO-Aufgabe) formulierbar. Damit ist eine leichte Implementierung ermöglicht.

Gemäß einer Ausführungsform der vorliegenden Erfindung berücksichtigt das Bewertungsschema mindestens eines der Folgenden: eine auftretende Kollision zweier Zeit-Weg-Definitionen; das Vorhandensein genau einer Zeit-Weg-Definition eines Schienenfahrzeuges.

Falls eine Trasse (z.B. Weg-Zeit-Definition) im Fahrplan vorhanden ist, kann ihre Qualität (oder Bewertung/Gewichtung) (gewichtete Pünktlichkeit und Gleisgenauigkeit) in die Matrix-Diagonale (Zielfunktion) aufgenommen werden. In den sonstigen (nicht-Diagonal) Stellen der Matrix können die Strafen (bzw. deren numerische Werte) für zwei gleichzeitig ausgewählte Trassen gespeichert werden: z.B. a) für den verpassten Anschluss (z.B. kleine Strafe) und b) für eine Kollision dieser zwei Trassen (z.B. große Strafe).

Das Bewertungsschema kann an die erforderlichen Anwendungsfälle angepasst werden, indem z.B. die Gewichte für Verspätungen, verlegte Gleise und/oder verpasste Anschlüsse betreiberspezifisch definiert werden.

Damit kann das Verfahren auf verschiedene Anwendungsfälle adaptiert werden. Das Bewertungsschema kann zum Beispiel auch aus Erfahrungswerten gewonnen oder verändert werden.

Gemäß einer Ausführungsform der vorliegenden Erfindung weist das Lösen der QUBO-Aufgabe auf: Eingeben der zweidimensionalen Eingabedatenstruktur in eine Hardware- und/oder Software-gestützten Rechenmaschine; Durchführen einer quadratischen nicht eingeschränkten binären Optimierung in der Rechenmaschine, insbesondere um die Zielfunktion für ein zu bestimmendes Argument zu optimieren; Ausgeben einer (der optimierten Zielfunktion zugeordnete) eindimensionalen Ausgabedatenstruktur, insbesondere binärer Ergebnisvektor, wobei jede Komponente einer Zeit-Weg-Definition (der vorgehaltenen Zeit-Weg-Definitionen) zugeordnet ist.

Der binäre Ergebnisvektor kann angeben, welche der eingegebenen der vorgehaltenen Zeit-Weg-Definitionen in dem Ergebnisfahrplan enthalten sind und welche nicht enthalten sind, indem die jeweilige Ergebnisvektorkomponente auf 1 bzw. 0 gesetzt wird.

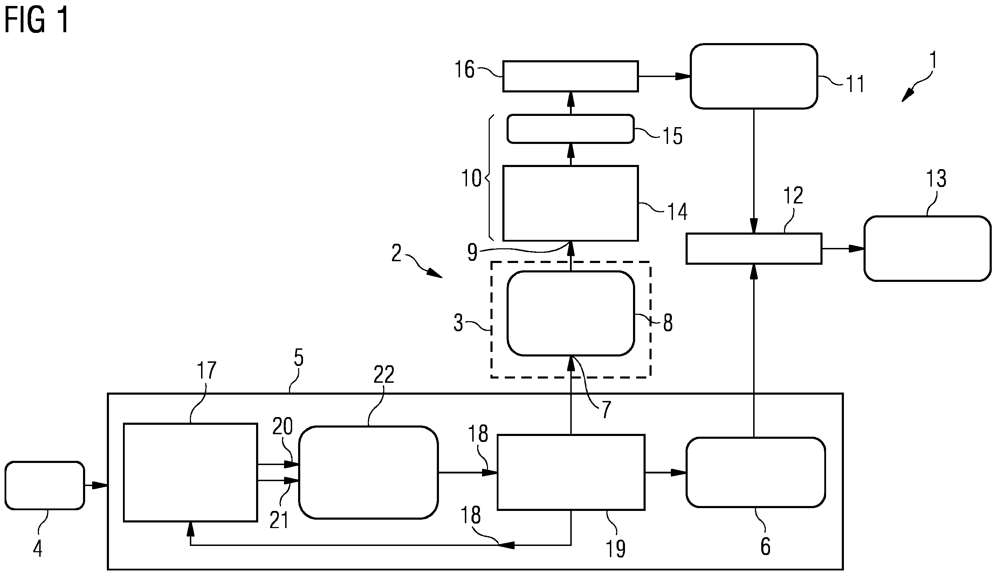

Der binäre Ergebnisvektor könnte auch nicht umsetzbare Lösungen beinhalten: wenn a) aus mehreren alternativen Trassen keine oder mehr als eine ausgewählt wurde oder b) ausgewählte Trassen sich überschneiden. In diesem Fall kann die DA-Lösung (z.B. die Lösung der QUBO-Aufgabe) verworfen und die beste bisher errechnete Lösung des heuristischen Verfahrens verwendet (siehe z.B. Block 6 in Fig. 1, die unten näher beschrieben ist) .

Der binäre Ergebnisvektor kann zum Beispiel mehr Einsen aufweisen als die Anzahl der Schienenfahrzeuge. In diesem Fall enthielte der Ergebnisvektor für ein Schienenfahrzeug zum Beispiel mehr als eine Zeit-Weg-Definition. In einem solchen Fall kann der binäre Ergebnisvektor nachbehandelt bzw. verändert werden, um eine der Zeit-Weg-Definitionen für ein Schienenfahrzeug auszuwählen.

Der binäre Ergebnisvektor könnte zum Beispiel auch für zwei Zeit-Weg-Definitionen, welche zu einer Kollision führen, eine 1 enthalten. Auch dieses Problem könnte in einem folgenden Auswerte- bzw. Analyseschritt erkannt und behoben werden Die quadratische nicht eingeschränkte binäre Optimierung (quadratic unconstrained binary optimization) basiert auf einer quadratischen Matrix, die auf einem Binärvektor angewendet wird, um die Zielfunktion zu definieren. Die quadratische Matrix wird im Folgenden auch als Q-Matrix bezeichnet. Sie entspricht der vorhergehend genannten zweidimensionalen Eingabedatenstruktur. Die Q-Matrix kann reelle Matrixelemente enthalten, so dass sie eine trianguläre Matrix ist. Somit kann die QUBO-Aufgabe auf einfache Weise , z.B. mit im Stand der Technik bekannten Methoden, gelöst werden.

Gemäß den Ausführungsformen der vorliegenden Erfindung weist die Rechenmaschine mindestens eines der Folgenden auf: einen QUBO-Chip; einen Quantencomputer; eine Grafikverarbeitungseinheit. Damit kann das Verfahren teilweise hardwaremäßig gestützt sein, um die Rechengeschwindigkeit zu erhöhen.

Gemäß einer Ausführungsform der vorliegenden Erfindung ist das zyklische Durchführen der heuristischen Optimierung ein wiederholtes, insbesondere iteratives, Ausführen der heuristischen Optimierung unter Verwendung zumindest eines vorherig ermittelten Ergebnisses umfasst, wobei die in jedem Zyklus des wiederholten Ausführens erzeugten Zeit-Weg-Definitionen akkumulativ zu den in vorherigen Zyklen erzeugten und vorher gespeicherten Zeit-Weg-Definitionen gespeichert werden, um so die Anzahl der gespeicherten Zeit-Weg-Definitionen in jedem Zyklus zu erhöhen, um insbesondere höher zu sein als die Anzahl der Schienenfahrzeuge.

Damit können herkömmlich verfügbare Algorithmen zur Implementierung herangezogen werden.

Gemäß einer Ausführungsform der vorliegenden Erfindung weist die heuristische Optimierung in jedem Zyklusschritt aufweist: Verändern zumindest einer einem vorherig erstellten Kandidaten eines Fahrplans bzw. dem ursprünglichen Fahrplan zugeordneten Zeit-Weg-Definition zumindest eines Schienenfahrzeuges; Erstellen eines Kandidaten eines Fahrplans basierend auf vorherigen Zeit-Weg-Definitionen von einem oder mehreren Schienenfahrzeugen und der zumindest einen veränderten Zeit-Weg-Definition; Auswerten des Kandidaten des Fahrplans und Vergleichen mit zuvor erstellten Kandidaten, falls vorhanden; Ausgeben des dem Zyklusschritte zugeordneten ersten Fahrplans, wobei insbesondere zwischen 10 bis 1000 Zyklen ausgeführt werden.

Die Veränderung der Zeit-Weg-Definition kann zufällig oder zielgerichtet erfolgen. Je nach verwendeter Heuristik kann die Veränderung der Zeit-Weg-Definition zufällig (z.B. genetische Algorithmen, Simulated Annealing) oder deterministisch (z.B. TabuSearch, Greedy-verfahren) erfolgen. Ziel der Veränderungen ist die Verbesserung der Zielfunktion.

Das Auswerten des Kandidaten des Fahrplans kann zum Beispiel mit Hilfe einer Zielfunktion der heuristischen Optimierung durchgeführt werden. Damit kann eine Bewertung des Kandidaten vorgenommen werden und die Bewertung kann mit vorherig bestimmten Bewertungen anderer Kandidaten des Fahrplans verglichen werden. Falls die Bewertung des aktuellen Kandidaten des Fahrplans besser oder günstiger ist als die bisherigen Bewertungen, kann der jeweilige Momentankandidat als der erste Fahrplan ausgegeben werden. Somit sind herkömmlich verfügbare Verfahren für Teile des erfindungsgemäßen Verfahrens anwendbar.

Gemäß einer Ausführungsform der vorliegenden Erfindung weist das Verändern einer Zeit-Weg-Definition mindestens eines der Folgenden auf: Verändern mindestens eines Ortspunktes der Zeit-Weg-Definition; Verändern mindestens eines Zeitpunktes der Zeit-Weg-Definition; Länger oder kürzer Warten an einem oder mehreren Ortspunkten der Zeit-Weg-Definition; Schneller oder langsamer Fahren zwischen zwei oder mehr Ortspunkten der Zeit-Weg-Definition.

Gemäß einer Ausführungsform der vorliegenden Erfindung erfolgt das Auswerten des Kandidaten des Fahrplans und Vergleichen mit zuvor erstellten Kandidaten basierend auf einer Bewertungsfunktion. Die Bewertungsfunktion kann den aktuellen Erfordernissen der Anwendung angepasst werden.

Die Bewertungs- oder Zielfunktion der heuristischen Optimierung kann ähnlich oder gleich gestaltet sein wie die Funktion, welche in der QUBO-Aufgabe definiert ist.

Bewertungs-/Zielfunktion(en) der heuristischen Optimierung können sich teilweise mit Bewertungs-/Zielfunktion(en) der QUBO-Aufgabe überschneiden oder verschieden sein.

Eine Bewertungs-/Zielfunktion der heuristischen Optimierung kann z.B. Bewertungen oder Strafen für Verspätungen und/oder für Gleiswechsel und/oder für verpasste Anschlüsse aufweisen.

Die QUBO-Bewertungs-/Zielfunktion kann z.B. eine Bewertungs-/Zielfunktion der heuristischen Optimierung enthalten und/oder zusätzlich Bewertungen oder Strafen für Kollisionen und/oder MehrereTrassenAlternativen und/oder für keineTrassenAlternative umfassen.

Gemäß einer Ausführungsform der vorliegenden Erfindung wendet die heuristische Optimierung mindestens eines der folgenden Verfahren an: Branch and Bound; Greedy; TabuSearch; genetischer Algorithmus; Simulated annealing.

Gemäß einer Ausführungsform der vorliegenden Erfindung wird das Verfahren in Echtzeit ausgeführt, wobei die heuristische Optimierung vor einem ersten Zeitpunkt, an dem der veränderte Fahrplan benötigt wird, abgebrochen wird und der letzte dann vorliegende Kandidat eines Fahrplans als der erste Fahrplan genommen wird, wobei das Formulieren und Lösen der QUBO-Aufgabe basierend auf den vor dem ersten Zeitpunkt gespeicherten Zeit-Weg-Definitionen erfolgt, um den zweiten Fahrplan zu erzeugen.

Das Verfahren kann zum Beispiel begonnen werden, sobald die Störung auftritt, die die Ausführung des ursprünglichen Fahrplans verhindert. Wann der Zugverkehr weiter betrieben werden muss gemäß einem geänderten Fahrplan, kann zum Beispiel durch eine Überwachungsstelle oder Leitstelle vorgegeben werden. Alle bis zu diesem Zeitpunkt erzeugten Fahrpläne, also der erste Fahrplan und der zweite Fahrplan können dann herangezogen werden, um den veränderten Zeitplan noch vor dem Zeitpunkt zu bestimmen, zu dem der Zugverkehr wieder in Betrieb genommen werden soll oder wird.

Gemäß einer Ausführungsform der vorliegenden Erfindung weist das Verfahren ferner zumindest eines der Folgenden auf: einem Benutzer Anzeigen des ersten und des zweiten Fahrplans separat oder in Kombination, insbesondere Überlagerung; einem Benutzer Anzeigen von Unterschieden zwischen dem ersten und dem zweiten Fahrplan; einem Benutzer eine Auswahl des ersten oder des zweiten Fahrplans ermöglichen, um den veränderten Fahrplan festzulegen.

Wenn dem Benutzer der erste und der zweite Fahrplan angezeigt werden, kann eine Auswahl durch den Benutzer schneller getroffen werden. Mögliche Nachteile oder Probleme des ersten und/oder des zweiten Fahrplans können dem Benutzer durch entsprechende Hervorhebungen angezeigt werden. Die letztendliche Auswahl des ersten oder des zweiten Fahrplans kann maschinenunterstützt und/oder auch durch menschliche Intelligenz und durch Benutzereingabe erfolgen.

Gemäß einer Ausführungsform der vorliegenden Erfindung weist das Verfahren ferner zumindest eines der Folgenden auf: Anweisen der Schienenfahrzeuge und/oder einer Schienenfahrzeugleitstelle und/oder einer Schienenfahrzeugsteuerung und/oder einer Schienenfahrzeugüberwachung gemäß dem veränderten Fahrplan. Damit können relevante Stellen über den veränderten Fahrplan in Kenntnis gesetzt werden, um diesen auch zuverlässig und reibungsfrei umsetzen zu können.

Gemäß einer Ausführungsform der vorliegenden Erfindung legt die einem Schienenfahrzeug zugeordnete Zeit-Weg-Definition fest, zu welcher Zeit sich das Schienenfahrzeug an welchem Ort planmäßig befinden sollte. Die Zeit-Weg-Definition kann zum Beispiel als eine Liste von Paaren von Zeitpunkten und Ortspunkten ausgeführt sein. Die Zeit-Weg-Definition kann auch grafisch definiert oder anzeigbar sein.

Gemäß einer Ausführungsform der vorliegenden Erfindung ist eine Vorrichtung zum Ermitteln eines veränderten Fahrplans für mehrere Schienenfahrzeuge bei Vorliegen zumindest einer Störung eines ursprünglichen Fahrplans bereitgestellt, wobei ein Fahrplan für jedes Schienenfahrzeug eine Zeit-Weg-Definition enthält, wobei die Vorrichtung aufweist: eine Rechenmaschine mit Speicher, die ausgebildet ist: basierend auf dem ursprünglichen Fahrplan, zyklische eine heuristische Optimierung durchzuführen, um einen ersten Fahrplan zu erzeugen; Zeit-Weg-Definitionen für ein oder mehrere Schienenfahrzeuge, die während der zyklisch durchgeführten heuristischen Optimierung erzeugt wurden, zu speichern; eine basierend auf den gespeicherten Zeit-Weg-Definitionen formuliert QUBO-Aufgabe zu lösen, um einen zweiten Fahrplan zu erzeugen; eine Anzeige- und/oder Analyse-Vorrichtung, die ausgebildet ist, den ersten und den zweiten Fahrplan anzuzeigen und/oder zu analysieren, um eine Auswahl des veränderten Fahrplan zu ermöglichen.

Es sollte verstanden werden, dass Merkmale, individuell oder in irgendeiner Kombination, die im Zusammenhang mit einem Verfahren eines Ermittelns eines veränderten Fahrplans für mehrere Schienenfahrzeuge erwähnt, beschrieben oder angewendet werden, ebenso, gemäß Ausführungsformen der vorliegenden Erfindung auf eine Vorrichtung eines Ermittelns eines geänderten Fahrplans für mehrere Schienenfahrzeuge anwendbar sind oder angewendet werden können, gemäß Ausführungsformen der vorliegenden Erfindung und umgekehrt.

Gemäß einer Ausführungsform der vorliegenden Erfindung ist eine Schienenfahrzeugleitstelle bereitgestellt, aufweisend: eine Vorrichtung gemäß der vorangehenden Ausführungsform; ein Kommunikationssystem, das ausgebildet ist, den veränderten Fahrplan zumindest an die Schienenfahrzeuge zu übermitteln.

Ausführungsformen der vorliegenden Erfindung werden nun mit Bezug auf die beiliegenden Zeichnungen erläutert. Die Erfindung ist nicht auf die illustrierten oder beschriebenen Ausführungsformen beschränkt.

### KURZE BESCHREIBUNG DER ZEICHNUNGEN

Fig. 1 illustriert in schematischer Weise eine Vorrichtung zum Ermitteln eines veränderten Fahrplans für mehrere Schienenfahrzeuge gemäß einer Ausführungsform der vorliegenden Erfindung, welche ausgebildet ist, ein Verfahren eines Ermittelns eines veränderten Fahrplans gemäß einer Ausführungsform der vorliegenden Erfindung auszuführen;
Fig. 2 illustriert exemplarisch das Erzeugen eines zweiten Fahrplans basierend auf einer Datenbank von Zeit-Weg-Definitionen gemäß einer Ausführungsform der vorliegenden Erfindung;
Fig. 3 illustriert beispielhaft verschiedene Zeit-Weg-Definitionen für Schienenfahrzeuge, wie sie gemäß Ausführungsformen der vorliegenden Erfindung betrachtet bzw. erzeugt werden; und
Fig. 4 illustriert in schematischer Weise eine Vorrichtung bzw. ein Verfahren eines Ermittelns eines veränderten Fahrplans gemäß einer Ausführungsform der vorliegenden Erfindung.

### DETAILLIERTE BESCHREIBUNG VON AUSFÜHRUNGSFORMEN

Die in **Fig. 1** in schematischer Weise illustrierte Vorrichtung 1 zum Ermitteln eines veränderten Fahrplans für mehrere Schienenfahrzeuge bei Vorliegen zumindest einer Störung eines ursprünglichen Fahrplans weist eine Rechenmaschine 2 mit einem Speicher 3 auf. Die Rechenmaschine 2 ist ausgebildet, basierend auf einem ursprünglichen Fahrplan 4, welcher eine Störung aufweist, zyklisch eine heuristische Optimierung mithilfe von Modul 5 durchzuführen, um einen ersten Fahrplan 6 (z.B. 100 Trips enthaltend) zu erzeugen.

Die Rechenmaschine 2 ist ferner ausgebildet, Zeit- oder Weg-Definitionen 7 für ein oder mehrere Schienenfahrzeuge, die während der zyklisch durchgeführten, heuristischen Optimierung 5 erzeugt wurden, zu speichern, insbesondere in einer Datenbank 8 abzuspeichern, welche in dem Speicher 3 enthalten ist. Die Rechenmaschine 2 ist ferner ausgebildet, eine basierend auf den gespeicherten Zeit-Weg-Definitionen 9 (welche in der Datenbank 8 enthalten sind, z.B. 7000 Trips enthaltend) formulierte QUBO-Aufgabe 10 zu lösen, um einen zweiten Fahrplan 11 zu erzeugen.

Die Vorrichtung 1 umfasst ferner eine Anzeige- und/oder Analyse-Vorrichtung 12, die ausgebildet ist, den ersten Fahrplan 6 und den zweiten Fahrplan 11 anzuzeigen und/oder zu analysieren, um eine Auswahl des veränderten Fahrplans 13 zu ermöglichen. Der veränderte Fahrplan 13 wird somit durch Auswahl aus dem ersten Fahrplan 6 und dem zweiten Fahrplan 11 erhalten.

Das Modul 10 zum Formulieren einer QUBO-Aufgabe umfasst ein Berechnungsmodul 14, in dem eine zweidimensionale Eingabedatenstruktur (im Folgenden auch als Q-Matrix bezeichnet) aus den vorgehaltenen Zeit-Weg-Definitionen 9 und einem nicht im Detail illustrierten Bewertungsschema berechnet wird. Die berechnete Matrix ist in Modul 15 dargestellt. In dem Formulierungsschritt 10 wird ferner eine zu optimierende Zielfunktion aufgestellt bzw. definiert und zwar basierend auf der Q-Matrix und insbesondere einem Bewertungsschema

Die zu optimierende Zielfunktion kann zum Beispiel folgende Form haben:
Summe(Q[i,j]*x[i]*x[j]) -> min für i=0..N, j=0..N
N bezeichnetAnzahl der alternativen Trassen (z.B. Weg-Zeit-Definitionen)

Dabei sind die Elemente Qᵢⱼ die Elemente der Q-Matrix und der Vektor xi stellt den binären Ergebnisvektor dar (für den die Zielfunktion optimiert und insbesondere minimiert ist), wobei jede Komponente des Vektors xi einer Zeit-Weg-Definition entspricht.

In der in Fig. 1 illustrierten Vorrichtung umfasst die Rechenmaschine 2 ein QUBO-Lösungsmodul 16 in Form eines QUBO-Chips, welcher die Q-Matrix 15 empfängt und daraus den zweiten Fahrplan 11 als optimierten Fahrplan berechnet. In anderen Ausführungsformen kann die Rechenmaschine zum Beispiel einen Quantencomputer oder eine Grafikverarbeitungseinheit mit vielen Parallel-Prozessoren als QUBO-Lösungsmodul 16 umfassen.

Die zweidimensionale Eingabedatenstruktur, d.h. die Q-Matrix, wird in den QUBO-Chip 16 eingegeben, welcher eine quadratische nicht eingeschränkte binäre Optimierung durchführt. Als Ausgabe gibt der QUBO-Chip 16 den zweiten Fahrplan 11 aus, welcher als ein binärer Ergebnisvektor der QUBO-Prozessierung angesehen werden kann. Diejenigen Zeit-Weg-Definitionen, in denen in dem Ergebnisvektor eine 1 zugeordnet sind, sind tatsächlich Zeit-Weg-Definitionen in dem ersten Fahrplan 11.

Die zyklische Optimierung bzw. das zyklische Optimierungsmodul 5 der Rechenmaschine 2 enthält ein Veränderungsmodul 17, welches in zyklischer Weise (angezeigt durch den Pfeil 18) nach Durchlaufen eines Auswertungsmoduls 19 (ebenfalls in dem heuristischen Optimierungsmodul 5 enthalten) aufgerufen wird. In dem Veränderungsmodul 17 wird zumindest eine einem vorherig erstellten Kandidaten 18 eines Fahrplans bzw. dem ursprünglichen Fahrplan 4 (z.B. 100 Trips enthaltend) zugeordnete Zeit-Weg-Definition zumindest eines Schienenfahrzeuges verändert. Im ersten Schritt wird zumindest eine Zeit-Weg-Definition des eingegebenen ursprünglichen Fahrplans 4 geändert. In weiteren Zyklen wird mindestens eine Zeit-Weg-Definition eines innerhalb des Moduls 5 erzeugten Kandidaten 18 (z.B. 100 Trips enthaltend) eines ersten Fahrplans 6 verändert. Die eine oder die mehreren veränderten Zeit-Weg-Definitionen 20 und die unveränderten Zeit-Weg-Definitionen 21 werden in Auswertemodul 19 assoziiert und bilden den Kandidaten 18 eines ersten Fahrplans. In dem Auswertemodul 19 wird der Kandidat 18 ferner ausgewertet, und insbesondere mit zuvor erstellten Kandidaten verglichen. Die im Modul 19 erfolgte Auswertung gibt den ersten Fahrplan 6 schließlich aus.

Im Modul 17 werden z.B. Entscheidungsparameter verändert, z.B. Einführen eines zusätzlichen Haltes und/oder Änderung der Trassen-Prioritäten und/oder Änderung der Fahrwege und/oder Auflösung eines Haltes und/oder Auflösen eines Anschlusses etc. Diese Entscheidungsparameter (22) werden im Rahmen einer Betriebssimulation (18) verwendet, um einen konfliktfreien Fahrplan zu konstruieren. Dabei wird das physikalische Verhalten der Züge und der Stellwerke nachgebildet, um genaue und konfliktfreie Trassen (z.B. Weg-Zeit-Definitionen) zu berechnen. Der neu konstruierte Fahrplan wird anhand der Zielfunktion ausgewertet, wobei der errechnete Wert an Veränderungsmodul 17 mitgeteilt wird. Der Fahrplan selbst wird auch an Datenbank 8 8 geschickt und dort gespeichert, um einen Pool der Alternativen für QUBO zu bilden.

Die Auswertung im Modul 19 kann zum Beispiel basierend auf einer Zielfunktion oder basierend auf einer Bewertungsfunktion erfolgen. Innerhalb des Optimierungsmoduls 5, insbesondere in dem Veränderungsmodul 17, können verschiedene Algorithmen zur Anwendung kommen, zum Beispiel branch and bound, greedy, tabu search, genetischer Algorithmus oder andere heuristische Verfahren.

Die Anzeige- und/oder Analyse-Vorrichtung 12 ermöglicht auch einem Benutzer, den ersten Fahrplan 6 und/oder den zweiten Fahrplan 11 separat oder in Kombination anzuzeigen, um so eine Auswahl zu erleichtern. Es können zum Beispiel auch Unterschiede zwischen dem ersten Fahrplan 6 und dem zweiten Fahrplan 11 dem Benutzer angezeigt werden mittels des Moduls 12.

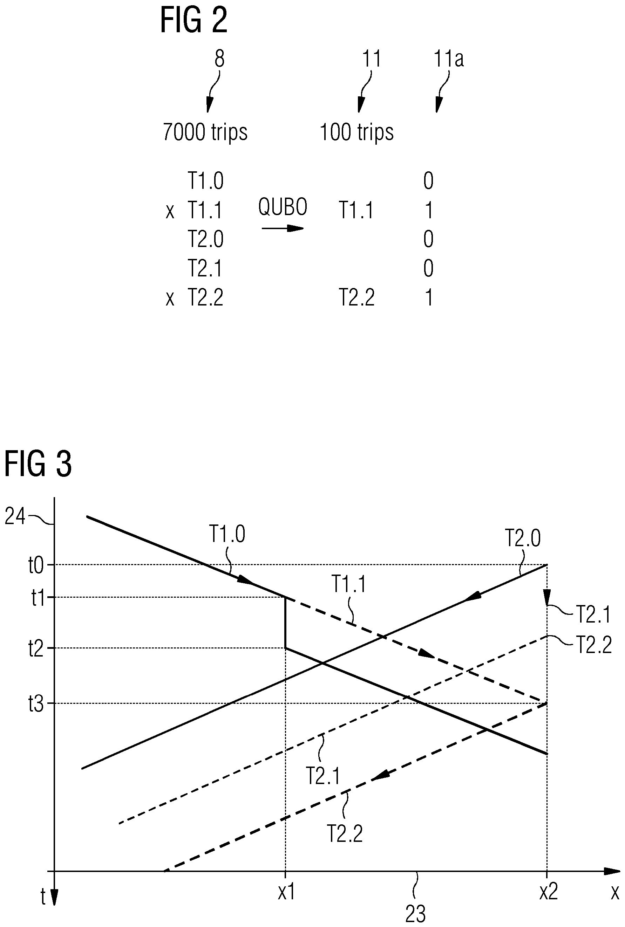

**Fig. 2** zeigt exemplarisch den Inhalt einer Datenbank 8, wenn zum Beispiel ein Fahrplan für zwei Schienenfahrzeuge T1 und T2 zu erstellen ist. In der Datenbank sind die Zeit-Weg-Definitionen T1.0 und T1.1 für ein erstes Schienenfahrzeug und die Zeit-Weg-Definitionen T2.0, T2.1, T2.2 für ein zweites Schienenfahrzeug gespeichert, die kumulativ durch zyklische Anwendung der heuristischen Optimierung 5 erzeugt wurden. Das Lösen der QUBO-Aufgabe resultiert in dem zweiten Fahrplan 11, welcher zum Beispiel als eindimensionaler Vektor 11a mit den Komponenten 0, 1, 0, 0, 1 dargestellt werden kann. Damit umfasst der zweite Fahrplan 11 die Zeit-Weg-Definitionen T1.1, T2.2.

Ein Beispiel der erwähnten Zeit-Weg-Definitionen ist in **Fig. 3** in einem Koordinatensystem mit Abszisse 23, die den Ort x repräsentiert und Ordinate 24, die die Zeit t repräsentiert, dargestellt. Dabei illustrieren die Zeit-Weg-Definitionen T1.0 und T2.0, die mit durchgezogenen Linien dargestellt sind, Zeit-Weg-Definitionen innerhalb des ursprünglichen aber gestörten Fahrplans 4. Die gestrichelt dargestellten Zeit-Weg-Definitionen stellen solche dar, welche während der heuristischen Optimierung erzeugt wurden.

Der ursprüngliche Fahrplan weist einen Konflikt bzw. eine Kollision der Zeit-Weg-Definitionen T1.0 und T2.0 bei dem Überschneidungspunkt auf. Die erzeugte Zeit-Weg-Definition T1.1 weist keine Wartezeit oder eine relativ geringe Wartezeit an den Koordinatenpunkten x1, t1 auf, steht aber immer noch in Konflikt mit der Zeit-Weg-Definition T2.0, jedoch nicht mit der erzeugten Zeit-Weg-Definition T2.1, welche eine Wartezeit an der Ortsposition X2 aufweist. Die Zeit-Weg-Definition T2.2 hat eine Wartezeit von t3-t0 an der Ortsposition X2 und kann somit die Kollisionen mit der Zeit-Weg-Definition T1.1 vermeiden.

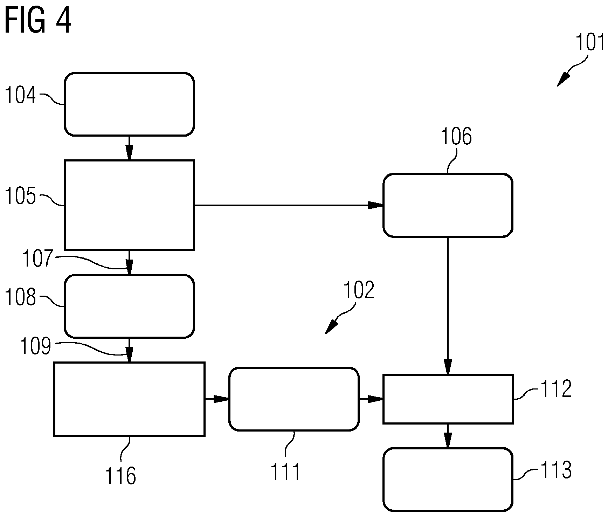

**Fig. 4** illustriert schematisch eine weitere Vorrichtung 101 zum Ermitteln eines veränderten Fahrplans 113 bei Vorliegen zumindest einer Störung eines ursprünglichen Fahrplans 104. Ähnliche oder gleiche Elemente oder Funktionen in Fig. 1 und 4 sind mit Bezugszeichen versehen, welche sich lediglich um 100 unterscheiden. Die Beschreibung eines in einer einzelnen Figur nicht im Detail beschriebenen Elementes kann der Beschreibung dieses korrespondierenden Elements in Bezug auf die andere Figur entnommen werden.

Die heuristische Optimierungsmethode (z.B. genetische Algorithmen, Tabu Search, etc.), welche vom Modul 105 implementiert wird, wird auf den gestörten Fahrplan 104 angewendet, um dabei Alternativen bzw. untersuchte Fahrpläne zu erzeugen. Die untersuchten Fahrpläne 107, die zyklisch erzeugt werden, werden in der Datenbank 108 als eine Menge von Zeit-Weg-Definitionen 109 gesammelt. Aus diesen Zeit-Weg-Definitionen (auch Alternativen genannt) 109 wird eine QUBO-Optimierungsaufgabe formuliert und vom QUBO-Lösungsmodul 116 gelöst. Das QUBO-Lösungsmodul kann zum Beispiel als ein Digitial Annealer implementiert werden. Der Digital Annealer 116 löst die Optimierungsaufgaben dadurch, dass er aus vorberechtigten Alternativen die beste Kombination auswählt.

Die Verfahren der heuristischen Optimierung und des Lösens der QUBO-Aufgabe werden gemäß Ausführungsformen der vorliegenden Erfindung kombiniert. Die heuristische Optimierung ist herkömmlicherweise durch die CPU-Leistungsfähigkeit begrenzt und kann unter Umständen das globale Optimum im konventionellen Verfahren nicht erreichen. Durch die schnelle Kombination der durchsuchten Alternativen kann eine bessere Lösung konstruiert werden als bisher erreicht gemäß Ausführungsformen der Erfindung. Der Digital Annealer (DA) benötigt möglichst gute und vollständige Alternativen, um durch bloße Kombination eine gute Lösung zu konstruieren.

Im Laufe der heuristischen Optimierung (z.B. in den Modulen 5 bzw. 105 in Fig. 1 und 4) werden nur valide (insbesondere konflikt- oder kollisionslose) und qualitativ immer bessere Lösungsalternativen (d.h. Kandidaten-Fahrpläne) konstruiert, was dem Digital Annealer (z.B. Modul 16 bzw. 116 in den Fig. 1 oder 4) ermöglicht, auch wirklich ein Optimum zu konstruieren. Falls der Digital Annealer keine gute konfliktfreie Lösung findet, ist immer noch NP-Hard), wird das Ergebnis der heuristischen Optimierung (zum Beispiel der erste Fahrplan 6 bzw. 106 in Fig. 1 und 4) verwendet.

In der Vorrichtung 101 wird ein gestörter Fahrplan 104 dem Modul 105 zugeführt, was eine heuristische Optimierung durchführt (z.B. 16 CPU-Kerne, 1 Minute). Die untersuchten Fahrpläne 107 werden in der Datenbank 108 akkumuliert. Die Summe der in der Datenbank 8 gespeicherten Zeit-Weg-Definitionen bzw. Alternativen 109 werden dem QUBO-Lösungsmodul 116 zugeführt, welches den Digital Annealer-optimierten Fahrplan 111 (auch als zweiter Fahrplan bezeichnet) erzeugt.

Das heuristische Optimierungsmodul 105 gibt den ersten Fahrplan 106 bzw. den optimierten Fahrplan 106 aus. Der optimierte Fahrplan (auch als erster Fahrplan bezeichnet) 106 und der DA-optimierte Fahrplan 111 (auch als zweiter Fahrplan bezeichnet) werden dem Auswertungsmodul 112 zur Auswertung bzw. zum Vergleich bzw. zur Anzeige zugeführt. Der finale Fahrplan (auch als geänderter Fahrplan bezeichnet) 113 wird als Ergebnis der Auswertung 112 ausgegeben.

Neben dem Digital Annealer könnten auch GPUs (Graphics Processing Units) verwendet werden, um die QUBO zu lösen.

## Patentansprüche

1. Verfahren eines Ermittelns eines veränderten Fahrplans (13) für mehrere Schienenfahrzeuge bei Vorliegen zumindest einer Störung eines ursprünglichen Fahrplans (4), wobei ein Fahrplan für jedes Schienenfahrzeug eine Zeit-Weg-Definition (T1.1, T2.1,...) enthält, wobei das Verfahren aufweist:
Basierend auf dem ursprünglichen Fahrplan (4), zyklisches (18) Durchführen einer heuristischen Optimierung (5), um einen ersten Fahrplan (6) zu erzeugen;
Vorhalten von Zeit-Weg-Definitionen (7, 9) für ein oder mehrere Schienenfahrzeuge, die während der zyklisch durchgeführten heuristischen Optimierung (5) erzeugt wurden;
Formulieren (10) einer QUBO-Aufgabe basierend auf den gespeicherten Zeit-Weg-Definitionen (9);
Lösen (16) der QUBO-Aufgabe, um einen zweiten Fahrplan (11) zu erzeugen;
Vergleichen des ersten Fahrplans (6) und des zweiten Fahrplans (11), um den veränderten Fahrplan (13) auszuwählen.

2. Verfahren gemäß dem vorherigen Anspruch, wobei das Formulieren der QUBO-Aufgabe aufweist:
Vorgeben eines numerischen Bewertungsschemas, welches Zeit-Weg-Definitionen und/oder Paare von Zeit-Weg-Definitionen bewertet;
Berechnen einer zweidimensionalen Eingabedatenstruktur (15, Q), insbesondere quadratische Matrix, aus den vorgehaltenen Zeit-Weg-Definitionen und dem Bewertungsschema, wobei die Eingabedatenstruktur (15, Q) eine Bewertung eines individuellen oder gemeinsamen Vorliegens der vorgehaltenen Zeit-Weg-Definitionen entsprechend dem Bewertungsschema repräsentiert,
Aufstellen einer zu optimierenden Zielfunktion (f(x)) basierend auf der zweidimensionalen Eingabedatenstruktur (15, Q),
wobei insbesondere jedes indizierte Element der Eingabedatenstruktur eine Bewertung des Vorliegens/Auftretens einer dem Index zugeordneten Zeit-Weg-Definition und/oder eine Bewertung des Vorliegens/Auftretens eines dem Index zugeordneten Paares von Zeit-Weg-Definitionen repräsentiert.

3. Verfahren gemäß dem vorherigen Anspruch, wobei das Bewertungsschema mindestens eines der Folgenden berücksichtigt:
eine auftretende Kollision zweier Zeit-Weg-Definitionen;
das Vorhandensein genau einer Zeit-Weg-Definition eines Schienenfahrzeuges;

4. Verfahren gemäß dem vorherigen Anspruch, wobei das Lösen der QUBO-Aufgabe aufweist:
Eingeben der zweidimensionalen Eingabedatenstruktur (15, Q) in eine Hardware- und/oder Software-gestützten Rechenmaschine (2, 16);
Durchführen einer quadratischen nicht eingeschränkten binären Optimierung in der Rechenmaschine, insbesondere um die Zielfunktion für ein zu bestimmendes Argument zu optimieren;
Ausgeben einer eindimensionalen Ausgabedatenstruktur (x), insbesondere binärer Ergebnisvektor, wobei jede Komponente des binärer Ergebnisvektors einer Zeit-Weg-Definition zugeordnet ist.

5. Verfahren gemäß dem vorherigen Anspruch, wobei die Rechenmaschine mindestens eines der Folgengen aufweist:
einen QUBO-Chip (16);
einen Quantencomputer;
eine Graphikverarbeitungseinheit (GPU).

6. Verfahren gemäß einem der vorherigen Ansprüche, wobei das zyklische Durchführen der heuristischen Optimierung (5) ein wiederholtes, insbesondere iteratives, Ausführen der heuristischen Optimierung unter Verwendung zumindest eines vorherig ermittelten Ergebnisses umfasst,
wobei die in jedem Zyklus des wiederholten Ausführens erzeugten Zeit-Weg-Definitionen (7) akkumulativ zu den in vorherigen Zyklen erzeugten und vorher gespeicherten Zeit-Weg-Definitionen gespeichert werden, um so die Anzahl der gespeicherten Zeit-Weg-Definitionen (9) mit jedem Zyklus zu erhöhen, um insbesondere höher zu sein als die Anzahl der Schienenfahrzeuge.

7. Verfahren gemäß einem der vorherigen Ansprüche, wobei die heuristische Optimierung in jedem Zyklusschritt aufweist:
Verändern (17) zumindest einer einem vorherig erstellten Kandidaten (18, 22) eines Fahrplans bzw. dem ursprünglichen Fahrplan (4) zugeordneten Zeit-Weg-Definition zumindest eines Schienenfahrzeuges;
Erstellen eines Kandidaten (22) eines Fahrplans basierend auf vorherigen Zeit-Weg-Definitionen von einem oder mehreren Schienenfahrzeugen und der zumindest einen veränderten Zeit-Weg-Definition;
Auswerten (19) des Kandidaten des Fahrplans und Vergleichen mit zuvor erstellten Kandidaten, falls vorhanden;
Ausgeben des dem Zyklusschritte zugeordneten ersten Fahrplans (6),
wobei insbesondere zwischen 10 bis 1000 Zyklen ausgeführt werden.

8. Verfahren gemäß dem vorherigen Anspruch, wobei das Verändern einer Zeit-Weg-Definition mindestens eines der Folgenden aufweist:
Verändern mindestens eines Ortspunktes (x1,x2) der Zeit-Weg-Definition (T1.0, T2.0);
Verändern mindestens eines Zeitpunktes (t1,t2) der Zeit-Weg-Definition;
Länger oder kürzer Warten an einem oder mehreren Ortspunkten der Zeit-Weg-Definition;
Schneller oder langsamer Fahren zwischen zwei oder mehr Ortspunkten der Zeit-Weg-Definition.

9. Verfahren gemäß einem der zwei vorherigen Ansprüche, wobei das Auswerten des Kandidaten (22) des Fahrplans und Vergleichen mit zuvor erstellten Kandidaten basierend auf einer Bewertungsfunktion erfolgt.

10. Verfahren gemäß einem der vorherigen Ansprüche, wobei die heuristische Optimierung (5) mindestens eines der folgenden Verfahren anwendet:
Branch and Bound;
Greedy;
TabuSearch;
genetischer Algorithmus.

11. Verfahren gemäß einem der vorherigen Ansprüche,
wobei das Verfahren in Echtzeit ausgeführt wird,
wobei die heuristische Optimierung (5) vor einem ersten Zeitpunkt, an dem der veränderte Fahrplan benötigt wird, abgebrochen wird und der letzte dann vorliegende Kandidat eines Fahrplans als der erste Fahrplan genommen wird,
wobei das Formulieren und Lösen der QUBO-Aufgabe basierend auf den vor dem ersten Zeitpunkt gespeicherten Zeit-Weg-Definitionen erfolgt, um den zweiten Fahrplan (11) zu erzeugen.

12. Verfahren gemäß einem der vorherigen Ansprüche, ferner aufweisend zumindest eines der Folgenden:
einem Benutzer Anzeigen des ersten Fahrplans (6) und des zweiten Fahrplans (11) separat oder in Kombination, insbesondere Überlagerung;
einem Benutzer Anzeigen von Unterschieden zwischen dem ersten und dem zweiten Fahrplan;
einem Benutzer eine Auswahl des ersten oder des zweiten Fahrplans ermöglichen, um den veränderten Fahrplan festzulegen.

13. Verfahren gemäß einem der vorherigen Ansprüche, ferner aufweisend Anweisen der Schienenfahrzeuge und/oder einer Schienenfahrzeugleitstelle und/oder einer Schienenfahrzeugsteuerung und/oder einer Schienenfahrzeugüberwachung gemäß dem veränderten Fahrplan.

14. Verfahren gemäß einem der vorherigen Ansprüche, wobei die einem Schienenfahrzeug zugeordnete Zeit-Weg-Definition (T1.0, T1.1,...) festlegt, zu welcher Zeit (t) sich das Schienenfahrzeug an welchem Ort (x) plangemäß befinden sollte.

15. Vorrichtung (1, 101) zum Ermitteln eines veränderten Fahrplans (13) für mehrere Schienenfahrzeuge bei Vorliegen zumindest einer Störung eines ursprünglichen Fahrplans (4), wobei ein Fahrplan für jedes Schienenfahrzeug eine Zeit-Weg-Definition (T1.0, T2.0, ...) enthält, wobei die Vorrichtung aufweist:
eine Rechenmaschine (2) mit Speicher (3), die ausgebildet ist:
basierend auf dem ursprünglichen Fahrplan (4), zyklische eine heuristische Optimierung (5) durchzuführen, um einen ersten Fahrplan (6) zu erzeugen;
Zeit-Weg-Definitionen (7, 9) für ein oder mehrere Schienenfahrzeuge, die während der zyklisch durchgeführten heuristischen Optimierung erzeugt wurden, zu speichern;
eine basierend auf den gespeicherten Zeit-Weg-Definitionen (9) formulierte QUBO-Aufgabe zu lösen, um einen zweiten Fahrplan (11) zu erzeugen;
eine Anzeige- und/oder Analyse-Vorrichtung (12), die ausgebildet ist, den ersten Fahrplan (6) und den zweiten Fahrplan (11) anzuzeigen und/oder zu analysieren, um daraus den veränderten Fahrplan (13) auszuwählen.

16. Schienenfahrzeugleitstelle, aufweisend:
eine Vorrichtung gemäß dem vorangehenden Anspruch;
ein Kommunikationssystem, das ausgebildet ist, den veränderten Fahrplan zumindest an die Schienenfahrzeuge zu übermitteln.
